# EUROPEAN PATENT SPECIFICATION

(11) **EP 1 980 478 B1**
(45) Date of publication and mention of the grant of the patent: **30.12.2009**
(21) Application number: 08251362.3
(22) Date of filing: 08.04.2008
(51) Int. Cl.: B62J 35/00, B62J 9/00, B62K 11/00, B62J 37/00

(54) **Motorcycle**
Motorrad
Motocyclette

(30) Priority: 09.04.2007 JP 2007102144; 28.02.2008 JP 2008048575
(43) Date of publication of application: 15.10.2008
(73) Proprietor: Yamaha Hatsudoki Kabushiki Kaisha, Iwata-shi, Shizuoka 438-8501 (JP)
(72) Inventor: Morishita, Kensuke, Iwata-shi Shizuoka-ken 438-8501 (JP); Nakamura, Michihisa, Iwata-shi Shizuoka-ken 438-8501 (JP); Kaku, Junichi, Iwata-shi Shizuoka-ken 438-8501 (JP)
(74) Representative: Harris, Ian Richard

(56) References cited:
- JP-A- 1 240 388
- JP-A- 6 270 869
- JP-A- 2005 096 504
- US-A- 4 385 676
- US-A- 4 469 190
- US-A1- 2006 066 092

## Description

### FIELD

The present invention relates to a motorcycle having an engine configured for operation with different types of fuels.

### BACKGROUND

So-called "flex fuel vehicles" (hereinafter referred to as "FFV") that allows the operation with different types of fuels have been put to practical use. A flex fuel engine mounted on this type of vehicle has a function to allow the operation with either the gasoline or the ethanol, and also to allow the operation with composite fuels of gasoline and ethanol at any mixing ratio.

On this type of FFV, a feedback control of the fuel injection amount is performed by calculating a mixing ratio of each fuel with an ECU. In order to perform learning by such an ECU, there is a case that a auxiliary tank (mixing chamber) is provided in a downstream side of a fuel tank for temporarily reserving composite fuel (see,for example, JP-U-Hei 3-59467).

Meanwhile, on a motorcycle, there is a case in which an auxiliary tank is disposed apart from a fuel supply system due to restriction of layout space for the auxiliary tank or the like depending on the lay out of the auxiliary tank. This causes a problem that a fuel pipe becomes unnecessarily long.

JP 2005-096504 relates to a fuel tank structure in a motorcycle. A fuel tank is divided into a main fuel tank and an auxiliary fuel tank. The auxiliary fuel tank includes a fuel pump.

The present invention seeks to provide a motorcycle in which a layout space for an auxiliary tank is secured while the length of a piping is suppressed to the required length.

### SUMMARY

An embodiment provides a motorcycle including: a body frame; an engine mounted on the body frame, the engine being made up of a cylinder and a cylinder head stacked in the forward of a crankcase; a throttle body connected to the cylinder head of the engine; a fuel injection valve for supplying fuel to the engine; a fuel tank mounted above the engine; and a fuel pump disposed in the fuel tank; the motorcycle being capable of operating with different types of fuels, in which a fuel reservoir is defined separately from the fuel tank between the fuel tank and the rear part of the crankcase in the side view, the fuel reservoir being formed at a discharge port of the fuel pump..

Another embodiment provides a motorcycle in which the cylinder and the cylinder head are stacked in the forward of a crankcase, and in which a fuel reservoir is defined separately from the fuel tank between the throttle body and the rear part of an upper wall of the crankcase.

In the first embodiment, a fuel reservoir is disposed between a fuel tank and the rear part of a crankcase. Also, according to the second invention, a fuel reservoir is disposed between a throttle body and the rear part of an upper wall of a crankcase. Therefore, a layout space for an auxiliary tank can be secured while the length of a piping is suppressed to the required length.

### BRIEF DESCRIPTION OF THE DRAWINGS

Hereinafter, an embodiment of the present invention is described, by way of example only, with reference to the attached drawings.
FIG. 1 is a right side view of a motorcycle according to a first embodiment.
FIG. 2 shows an arrangement of an auxiliary tank according to a first embodiment.
FIG. 3 is a top plan view of the auxiliary tank.
FIG. 4 is a cross-sectional side view, showing an arrangement of an exhaust gas sensor according to the embodiment.
FIG. 5 is a cross-sectional plan view, showing an arrangement of the exhaust gas sensor.
FIG. 6 is a chart, showing a mixing state of the fuel relative to the elapsed time for describing the effect of the embodiment.
FIG. 7 is a chart, showing a mixing state of the fuel relative to the elapsed time for describing the effect of the embodiment.
FIG. 8 is a cross-sectional front view showing a modification example for the location of the exhaust gas sensor.
FIG. 9 is a right side view of a motorcycle according to a second embodiment.
FIG. 10 shows an arrangement of an auxiliary tank according to the second embodiment.
FIG. 11 is a right side view of a motorcycle according to a third embodiment.
FIG. 12 shows an arrangement of an auxiliary tank according to the third embodiment.
FIG. 13 is an arrangement view, showing a modification example of the auxiliary tank according to the third embodiment.
FIG. 14 is a schematic view, showing a modification example of a fuel pump to which the present invention is applicable.
FIG. 15 is a left side view of a motorcycle according to a fourth embodiment.
FIG. 16 is a perspective view showing an arrangement of an auxiliary tank according to the fourth embodiment.

### DETAILED DESCRIPTION

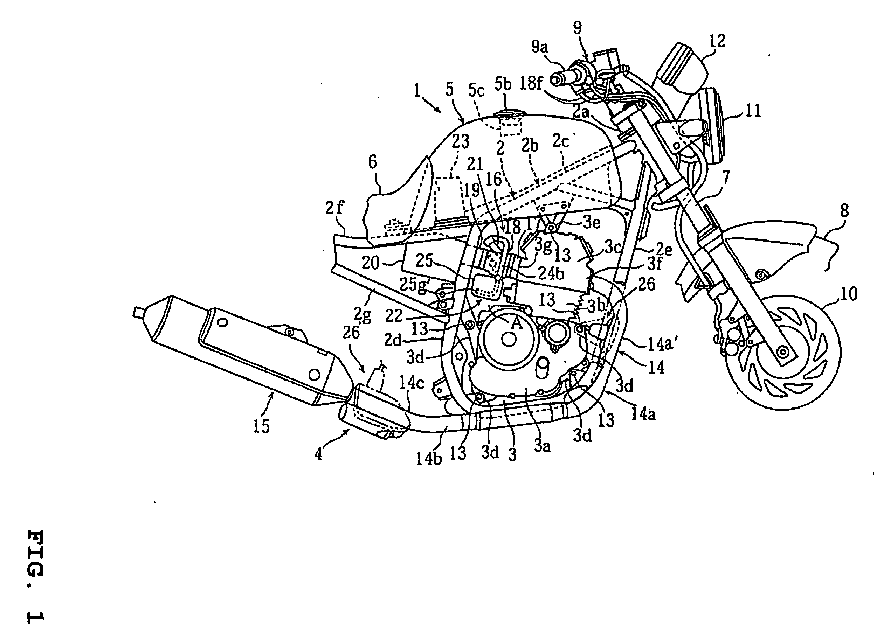

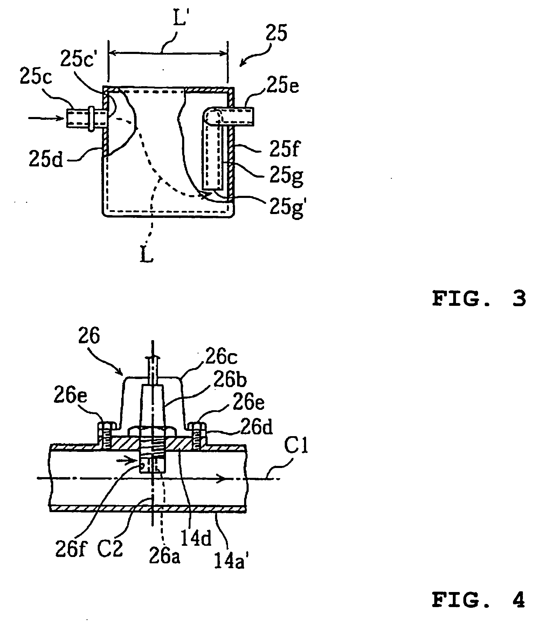

FIG. 1 through FIG. 7 are views illustrating a motorcycle according to a first embodiment. The terms "right," "left," "front" and "rear" used in this embodiment refer to the right, left, front and rear sides viewed from a rider seated on the seat.

In the figures, reference numeral 1 denotes a motorcycle including a body frame 2, an engine 3 mounted on the body frame 2, an exhaust device 4 connected to a front wall of the engine 3, a fuel tank 5 mounted on the body frame 2 to be located above the engine, and a seat 6 mounted in the rear of the fuel tank 5. By the way, reference numeral 5b denotes a cap for opening and closing a filler opening 5c of the fuel tank 5.

In addition, a front fork 7 is supported by a head pipe 2a located at the front end of the body frame 2 to allow free steering motion from side to side, and a front wheel 8 is rotatably supported at the lower end of the front fork 7, while a steering handle bar 9 is fixed to the upper end. By the way, reference numeral 10 denotes a disk plate for a braking device of the front wheel, reference numeral 11 a headlight, and reference numeral 12 a speedometer.

The body frame 2 has a main frame 2b which is of a so-called "double-cradle" type. The main frame 2b has a tank rail part 2c extending slantingly downward to the rear from the upper end of the head pipe 2a, a rear arm bracket part 2d extending downward from the rear end of the tail rail part 2c, and a down tube part 2e extending downward from the lower part of the head pipe 2a and then farther extending rearward in the generally horizontal direction until it is joined to the lower end of the rear arm bracket 2d. A seat rail 2f extends rearward from the connecting point of the tank rail part 2c and the rear arm bracket part 2d, and the rear end of the seat rail 2f is connected with the midway point of the rear arm bracket part 2d by a back stay 2g.

The engine 3 is mounted inside the main frame 2b of the body frame 2. The engine 3 is an air-cooled, four-cycle, single cylinder engine, having a general structure that a cylinder body 3b and a cylinder head 3c are built up on and joined to the front part of an upper wall of the crankcase 3a. A crankshaft (not shown) is housed in the crankcase 3a to be directed in the vehicle-width direction and a boss part 3d of the crankcase 3a and a boss part 3e of the cylinder head 3c are fixed to the main frame 2b by bolts 13.

The exhaust device 4 is provided with an exhaust pipe 14 connected to an exhaust port 3f in the front wall of the cylinder head 3c, and a muffler (silencer) 15 connected to the rear end of the exhaust pipe 14. The exhaust pipe 14 has an upstream side higher level pipe section 14a bending downward to the front between right and left down tube parts 2e, 2e from the exhaust port 3f and extending downward, a lowest level pipe section 14b extending horizontally in general to the rear from the lower end of the upstream side higher level pipe section 14a, and a downstream side higher level pipe section 14c extending slantingly upward to the rear from the read end of the lowest level pipe section 14b. Note that the lowest level pipe section 14b is disposed to run along the external right side face of the down tube part 2e where it extends horizontally in general below the engine 3.

An intake system 16 is connected to the rear wall of the cylinder head 3c. The intake system 16 has a throttle body 18 connected to an intake port 3g in the rear wall mentioned above via a joint member 17, and an air cleaner 20 connected to the throttle body 18 via an air duct 19.

The throttle body 18 contains a throttle valve 18a. The throttle valve 18a, formed inside the throttle body 18, controls the passage area of an intake passage 18d communicating with the intake port 3g via the joint member 17. The throttle valve 18a has a construction with a disc-shaped valve plate 18c fixed to a valve shaft 18b in the intake passage 18d. A pulley 18e fixed at the external end of the valve shaft 18b is connected to a throttle grip 9a on the steering handle 9 by means of a throttle cable 18f.

In addition, a fuel injection valve 21 is inserted and fixed to an upper wall of the throttle body 18. The fuel injection valve 21 is disposed to inject the fuel toward the back side of the valve head of the intake valve that opens and closes an opening at the combustion chamber end of the intake port 3g.

Further, the motorcycle according to this embodiment is provided with fuel supply device 22 that delivers the fuel to the fuel injection valve 21. The fuel supply device 22 includes the fuel tank 5, a fuel pump 23 disposed inside the fuel tank 5, a high pressure fuel piping 24 for connecting a discharge port 23c of the fuel pump 23 with the fuel injection valve 21, and an auxiliary tank 25 interposed in the midway of the high pressure fuel piping 24 and serving as a fuel reservoir in the present invention.

The fuel pump 23 is of a type that contains a pressure regulator, which draws in the fuel via a filter 23b from the intake port 23a formed near the bottom, and discharge the fuel from the discharge port 23c after pressurizing the fuel to the discharge pressure corresponding to the injection pressure of the fuel injection valve 21. The fuel pump 23 is inserted into the tank through an opening formed in a bottom wall 5a of the fuel tank 5, and a flange part 23f of the fuel pump 23 is fastened by means of bolts 23e and nuts 23e' implanted in the bottom wall 5a. By the way, reference numeral 23d denotes a float for detecting the oil level in the fuel tank. The fuel pump 23 is fixed to the bottom wall 5a of the fuel tank 5 by fastening the bolts, and the discharge port 23c projects downward relative to the bottom wall 5a.

The auxiliary tank 25 has a capacity of 10% to 40% of the engine displacement, or 0.2 to 3 % of the capacity of the fuel tank 5, and takes a form of sealed box made of resin or metal having a pressure resistance equivalent to that of the high pressure fuel piping 24. For reference, any surface treatment is applied to the inner surface of the auxiliary tank 25 to prevent corrosion caused by the alcohol contained in the fuel.

The auxiliary tank 25 is defined from the fuel tank 5 between the fuel tank 5 and the upper wall of the crankcase 3a. More specifically, the auxiliary tank 25 is located in a space "A" between the throttle body 18 and the rear part of the upper wall of the crankcase 3a.

Also, a mounting bracket 25a is formed on the auxiliary tank 25. The mounting bracket 25a is mounted to a lower wall part of the throttle body 18 by bolts 25b.

In addition, a fuel inflow pipe 25c of the auxiliary tank 25 is connected to a left side wall 25d, while a fuel outflow pipe 25e is connected to a right side wall 25f. Further, an inner extension part 25g is formed to the fuel outflow pipe 25e. An opening 25g' of the inner extension part 25g is disposed substantially apart from an opening 25c' of the fuel inflow pipe 25c. In other words, the inner extension part 25g constitutes a flow passage extension structure that makes the fuel flow path length "L" longer than the linear distance from the fuel inlet to the outlet "L'."

The high pressure fuel piping 24 has an upstream fuel piping 24a for connecting the discharge port 23c of the fuel pump 23 with the fuel inflow pipe 25c of the auxiliary tank 25, and a downstream fuel piping 24b for connecting the fuel outflow pipe 25e of the auxiliary tank 25 with the fuel injection valve 21.

The upstream fuel piping 24a is disposed at the left side of the throttle body 18 in the vehicle-width direction and the downstream fuel piping 24b is disposed at the right side of the throttle body 18 in the vehicle-width direction.

A connecter 24c is joined to a downstream end of the downstream fuel piping 24b. The connecter 24c is fitted in a fuel inflow opening of the fuel injection valve 21, and a flange part 24e of the connector 24c is fastened to the upper wall of the throttle body 18 by means of a bolt 24e. By the way, reference numeral 21b denotes a connector for connecting a power supply to the fuel injection valve 21.

Also, an exhaust gas sensor 26 for detecting the properties of the exhaust gas is disposed in the exhaust device 4. Specifically, the exhaust gas sensor 26 is an O₂ sensor for detecting the oxygen concentration in the exhaust gas, and is disposed on the upstream side higher level pipe section 14a located higher than and upstream of the lowest level pipe section 14b of the exhaust pipe 14.

More particularly, the upstream side higher level pipe section 14a has a vertical pipe section 14a' disposed between the right and left down tube parts 2e, 2e but deflected a little toward the down tube 2e on the right, and extending vertically along the down tube part 2e. The exhaust gas sensor 26 is disposed so that, in the cross-sectional plan view, the axis line C2 of the exhaust gas sensor 26 orthogonally crosses the axis line C1 of the vertical pipe section 14a' , and is inclined toward the left rear relative to the plane "D" extending transversely and containing the axis line C1 on it.

The exhaust gas sensor 26 includes a sensor body 26b having a detecting part 26a and a cover 26c for enclosing the sensor body 26b. The sensor body 26b is screwed into a boss portion 14d formed on the upstream side higher level pipe section 14a, and the cover 26c is also fastened to the boss portion 14d at its flange part 26d by means of bolts 26e.

In the case of the motorcycle 1 of this embodiment, the fuels composed of gasoline only and ethanol only can be used. Also, the composite fuels of gasoline and ethanol at any mixing ratio can be used. Then, O₂ feedback control is performed, which controls the amount of fuel injection based on the output of the exhaust gas sensor 26 to achieve the engine operation at stoichiometric fuel-air ratio. The fuel composition is learned based on the controlled amount described above, and the fuel injection is carried out according to the results of the learning even when the O₂ feedback control is not performed. Consequently, the engine can be started and operated even when the fuel composition is altered.

In this regard, conventional devices had a possible risk that the O₂ feedback control as described above cannot catch up with the drastic change in the fuel composition once the tank is filled with the fuel of different composition from the previous one while the fuel level in the tank is low.

In this embodiment, the auxiliary tank 25 serving as a fuel reservoir is defined from the fuel tank 5. Therefore, two different fuels are mixed slowly even when the tank is filled with the fuel of different composition from the previous one, which in turn can avoid the drastic change from the previous type of fuel to the different type of fuel that is delivered to the fuel injection valve 21, thus allowing the O₂ feedback control to catch up with the control operation without using larger control gain.

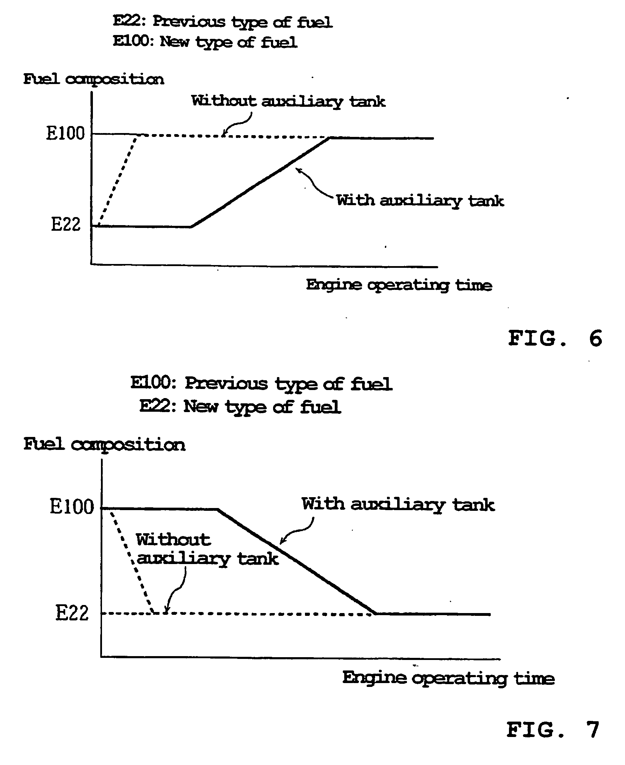

For instance, as shown in FIG. 6 in the case where a previous type of fuel E22 (ethanol 22%, gasoline 78%) was changed to a new type of fuel E100 (ethanol 100%), or alternatively as shown in FIG. 7, the previous type of fuel E100 was changed to the new type of fuel E22, the two types of fuel are mixed gradually within the auxiliary tank 25 as indicated with the solid line in both FIGs., and the O₂ feedback control can catch up with such change in the fuel, avoiding a malfunction of the engine. For reference, in the case where the auxiliary tank is not provided, the two types of fuels are mixed rapidly, and the O₂ feedback control cannot catch up with the change in the fuel, resulting in the possible engine malfunction.

In addition, when providing the auxiliary tank 25, the mixture of the previous type of fuel with the new type of fuel takes place even more slowly, since the auxiliary tank 25 is provided in the midway point of the high pressure fuel piping 24 which is the fuel supply passage connecting the fuel pump 23 to the fuel injection valve 21, thus it is even easier for the O₂ feedback control to catch up with the change in the fuel. Namely, when the tank was filled with the new type of fuel, the two types of fuels virtually do not mix up even after a long time, unless the fuel pump is activated. Then, as the fuel pump is activated, the two types of fuels mix up gradually.

Further, since the auxiliary tank 25 is disposed in the midway point of the high pressure fuel piping 24, the effect is achieved that the pulsation of the high pressure fuel coming from the fuel pump 23 is absorbed by the auxiliary tank 25.

According to the embodiment, since the auxiliary tank 25 is disposed in the space "A" between the throttle body 18 and

the upper wall of the crankcase 3a, the layout space for the auxiliary tank 25 with relatively larger capacity can be secured easily. Namely, a float chamber was disposed between the throttle body 18 and the upper surface of the crankcase 3a in the case of conventional carburetor type engine. In this embodiment, the fuel injection type engine is employed and the dead space is created because the float chamber is not necessary any more. The auxiliary tank 25 can be disposed easily by utilizing this dead space. As a result, the routing length of the high pressure fuel piping 24 can be minimized as required.

Also, the flow passage extension structure that makes the fuel flow passage length "L" longer than the linear distance "L'" from the fuel inlet to the outlet is employed inside the auxiliary tank 25. Both types of fuels can mix even more slowly by this structure. Namely, the inner extension part 25g is formed to the fuel outflow pipe 25e, and the opening 25g' of the inner extension part 25g is disposed substantially apart from the opening 25c' of the fuel inflow pipe 25c. Thus, the fuel passage length "L" is extended, allowing the two types of fuels to be mixed effectively utilizing the capacity of the auxiliary tank 25. For reference, if the inner extension part 25g is not provided, the fuel flowing-in from the fuel inflow pipe 25c tends to flow linearly toward the fuel outflow pipe 25e, and the capacity of the auxiliary tank 25 may not be utilized effectively.

Further, the fuel injection valve 21 is disposed above the throttle body 18, the auxiliary tank 25 is disposed under the throttle body 18 and both are connected by the fuel delivery piping 24b. Therefore, certain length of the fuel piping can be secured and capacity of the fuel piping can be utilized while arranging these components compactly around the throttle body.

In this embodiment, the fuel injection valve 21 is provided and thereby the float chamber is unnecessary in the throttle body 18. Accordingly, a relatively large space is secured below the throttle body 18. In this embodiment, the auxiliary tank 25 is disposed by utilizing this space. Therefore, the layout space for the auxiliary tank can be secured easily.

In addition, since the exhaust gas sensor 26 is disposed on the upstream side higher level pipe section 14a located higher than the lowest level pipe section 14b that defines the lowest part of the exhaust pipe 14, the water accumulated in the lowest level pipe section 14b is prevented from directly splashing onto the exhaust gas sensor 26. Especially when the engine is started with the exhaust gas sensor 26 being pre-heated, the splashing of the water onto the exhaust gas sensor 26 can be prevented accordingly, which in turn can prevent the damage to the exhaust gas sensor 26 caused by the heat shock.

Further, since the exhaust gas sensor 26 is disposed on the upstream side higher level pipe section 14a located higher than and upstream of the accumulated water, the splashing of water can be prevented even more positively, which in turn can prevent the heat shock.

More specifically, since the exhaust gas sensor 26 is disposed on the vertical pipe section 14a' located between the right and left down tube parts 2e, 2e, the exhaust gas sensor 26 is protected from the shock in motorcycle rollover, for instance. Also in this case, the exhaust gas sensor 26 is disposed to be inclined toward the left rear, taking advantage of the fact that the vertical pipe section 14a' is deflected a little toward the down tube 2e on the right, thus the layout space can be secured easily.

Since the exhaust gas sensor 26 is disposed so that the axis line C2 of the detecting part 26a of the exhaust gas sensor orthogonally crosses the axis line C1 of the exhaust pipe, higher accuracy can be attained in the detection of exhaust gas properties. Namely, being disposed as described above, the exhaust gas can more easily enter inside through an aperture 26f formed in the detecting part 26a of the sensor body 26b, which in turn results in higher detecting accuracy as the exhaust gas comes into contact positively with the detecting part 26a.

Here, in the first embodiment described above, the exhaust gas sensor 26 is disposed in the position closer to the engine, that is, on the upstream side higher level pipe section 14a located upstream of the lowest level pipe section 14b, but as a modification example is shown by the alternate long and two short dashes line in FIG. 1, an exhaust gas sensor 26' may be disposed in the position farther from the engine, that is, on the downstream side higher level pipe section 14c located downstream of the lowest level pipe section 14b.

In the case of such arrangement, the exhaust gas sensor 26' is remote from the engine, and therefore will not be damaged by the heat from the engine to allow a longer life.

Further, in the first embodiment and the modification example, the case in which the exhaust gas sensors 26, 26' are disposed on the upstream side higher level pipe section 14a and on the downstream side higher level pipe section 14c, which are higher than the lowest level pipe section 14b, is described to instantiate the exhaust gas sensor 26, 26' being disposed in the higher position than the lowest part of the exhaust pipe 14. However, the exhaust gas sensors 26, 26' may be disposed in the position in the lowest level pipe section 14b located higher than the bottom on which water accumulates or the upper wall of the lowest level pipe section 14b.

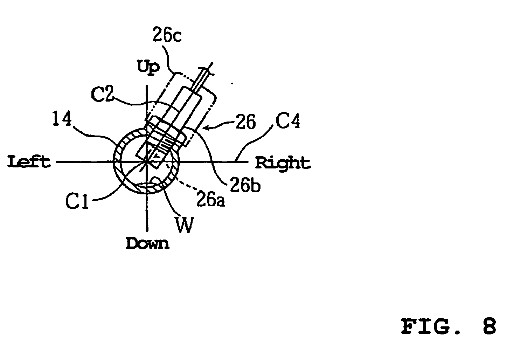

Specifically, as shown in FIG. 8, the exhaust gas sensor 26 can be disposed in the upper part relative to the horizontal line C4 passing through the axis line C1 of the exhaust pipe 14. In such arrangement, the water W accumulated in the bottom part of the exhaust pipe 14 has little possibility of splashing onto the detecting part 26a, thus the suppressing effect for the heat shock is achieved.

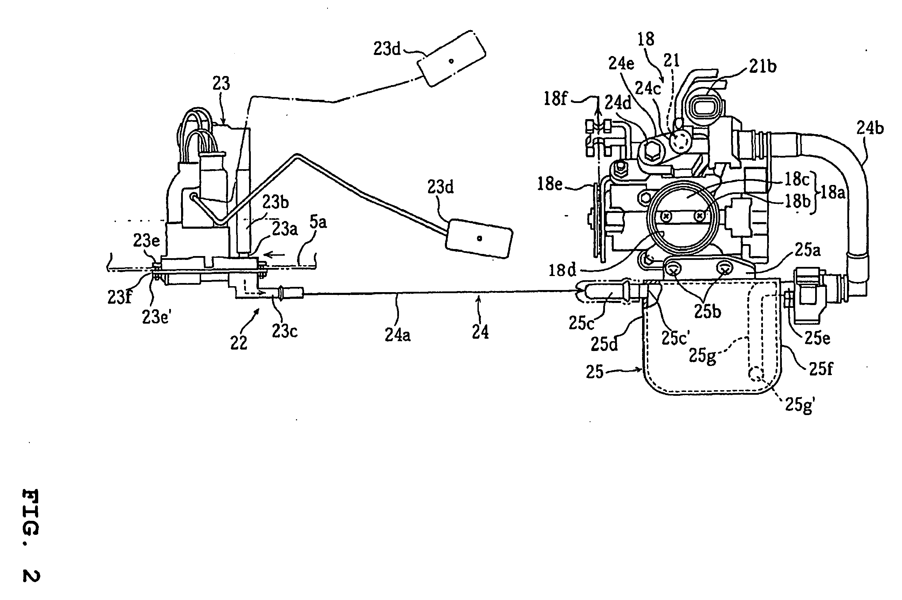

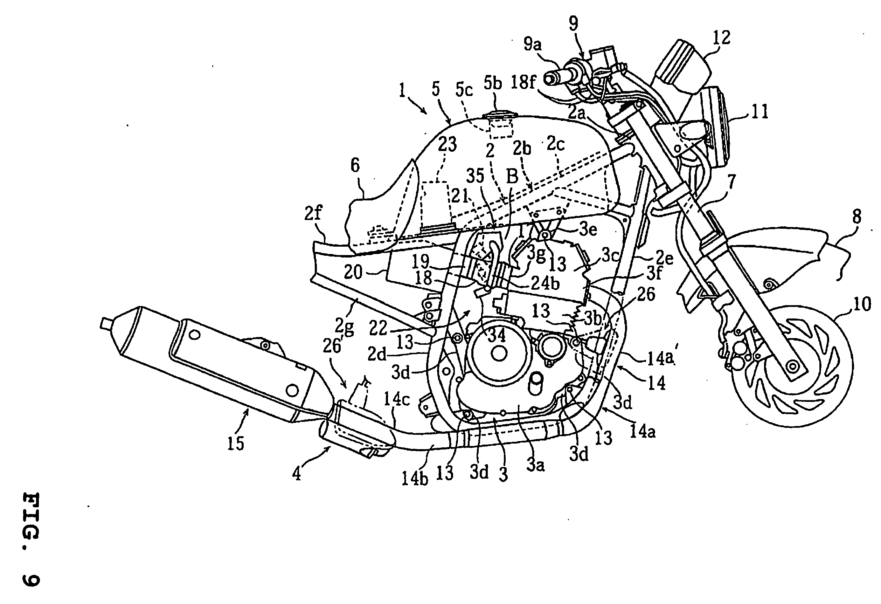

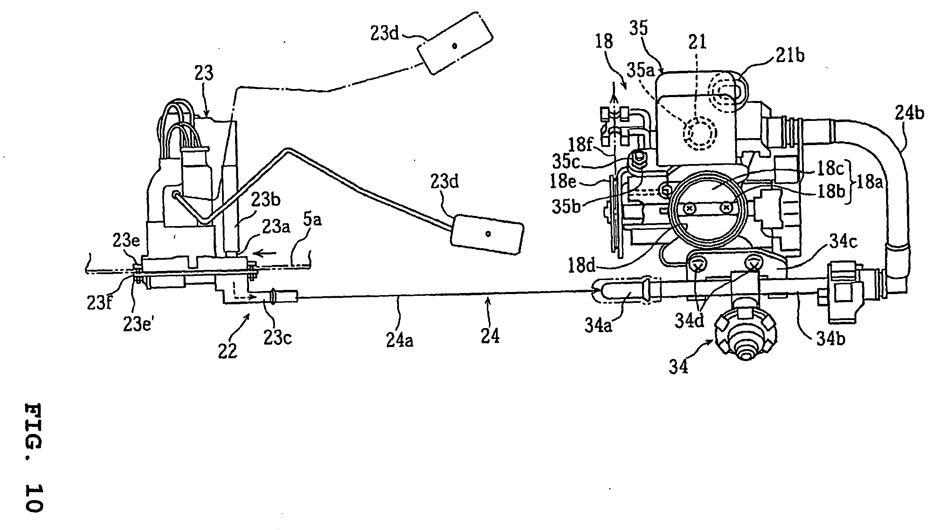

FIGs. 9 and 10 are for illustrating a second embodiment, in which reference numerals identical to those in FIGs. 1 and 2 show the identical or the equivalent parts.

The second embodiment is an example in which an auxiliary tank 35 serving as the fuel reservoir is disposed in a space "B" between the throttle body 18 and the fuel tank 5.

A damper 34 is interposed between an upstream fuel piping 24a and a downstream fuel piping 24b for absorbing the pulsation of the high-pressure fuel. A fuel inflow pipe 34a of the damper 34 is connected to the fuel pump 23 by means of the upstream fuel piping 24a, while a fuel outflow piping 34b is connected to the fuel injection valve 21 by means of the downstream fuel piping 24b. Also, a bracket 34c of the damper 34 is fastened to the throttle body 18 by bolts 34d.

In addition, the auxiliary tank 35 is connected to the downstream end of the downstream fuel piping 24b. The auxiliary tank 35 is formed by increasing the size of the connector 24c fitted in the fuel injection valve 21 in the first embodiment, and functions in the same manner as the auxiliary tank 25 in the first embodiment. A fuel outlet 35a of the auxiliary tank 35 is fitted into the fuel inflow opening of the fuel injection valve 21. In addition, the auxiliary tank 35 is fastened to the upper wall of the throttle body 18 via a bracket 35b by means of a bolt 35c.

The operational effect similar to that of the first embodiment is achieved by the second embodiment. In this embodiment, the auxiliary tank 35 is disposed in the immediate proximity of the fuel injection valve 21 between the throttle body 18 and the fuel tank 5. Therefore, a free space around the fuel injection valve 21 can be effectively utilized for the layout and the routing length of the upstream fuel piping 24a and downstream fuel piping 24b can be shortened.

Also, the auxiliary tank 35 is disposed in the immediate proximity of the fuel injection valve 21, so that the capacity of the piping from the fuel tank 5 to the fuel injection valve 21 works to slow down the mixture of the previous type of fuel with the new type of fuel. Thus, the two types of fuels can mix up even more slowly, and the ability for the O₂ feedback control to catch up with the change in the fuel can be improved further.

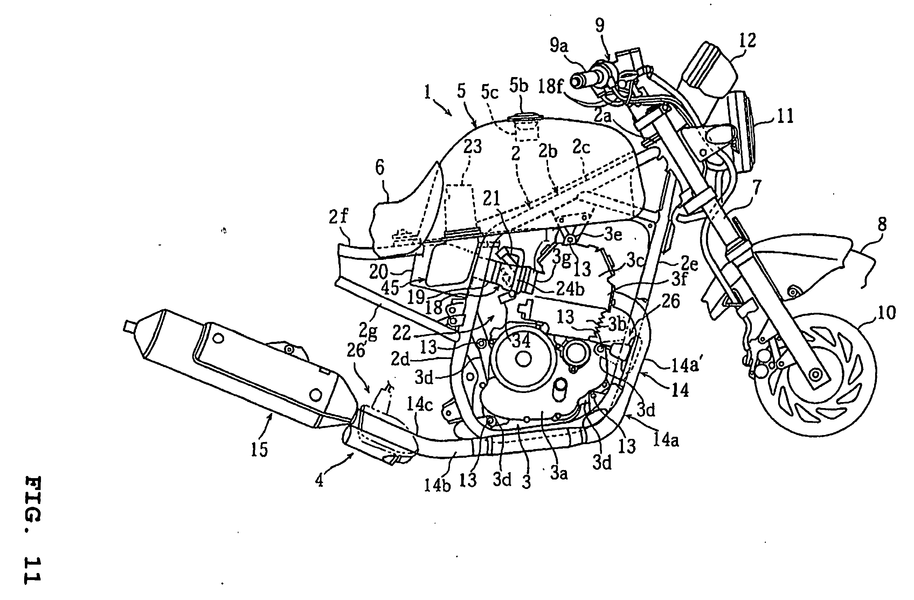

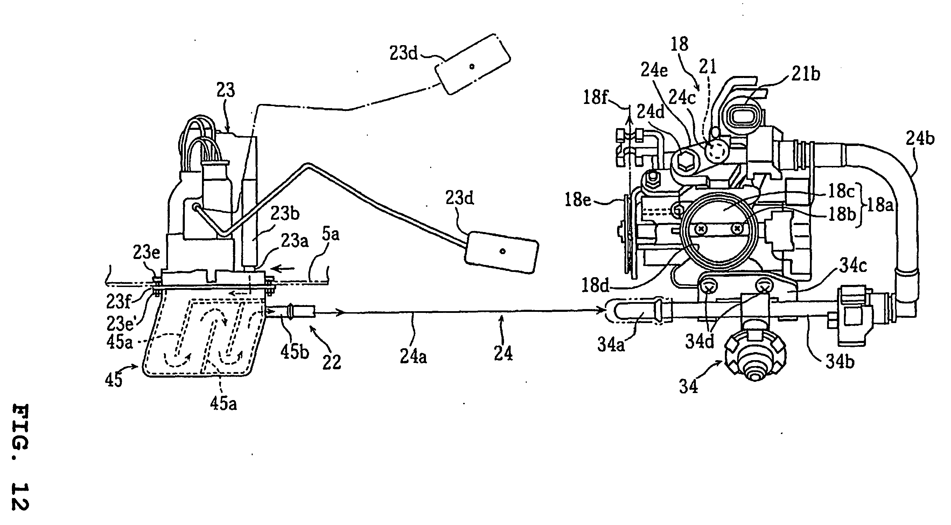

FIGs. 11 and 12 are for illustrating a third embodiment, in which reference numerals identical to those in FIGs. 1, 2, 9, and 10 show the identical or the equivalent parts.

The third embodiment is an example in which an auxiliary tank 45 serving as the fuel reservoir is disposed between the fuel tank 5 and the upper wall of the crankcase 3a. More specifically, the fuel reservoir is disposed immediately proximate to the fuel tank 5 and at the discharge port of the fuel pump 23.

The auxiliary tank 45 is formed continuously to the underside of the flange portion 23f of the fuel pump 23, taking the shape of generally a parallelogram in the side view, in order to secure the necessary capacity while avoiding the interference with the body frame.

Also the auxiliary tank 45 has bulkheads 45a that constitute a flow passage extension structure that makes the fuel flow path length longer than the linear distance from the fuel inlet to the fuel outlet. Specifically, a long flow passage having a labyrinth structure is formed by dividing the inner space of the auxiliary tank 45 by the bulkheads 45a. A fuel outlet pipe 45b of the auxiliary tank 45 is connected to the fuel injection valve 21 via the high pressure fuel piping 24 and the damper 34.

The operational effect similar to that of the second embodiment is achieved by the third embodiment. Also, since the auxiliary tank 45 is formed integrally with the discharge port of the fuel pump 23 located between the fuel tank 5 and the upper wall of the crankcase 3a, the auxiliary tank 45 can be provided with little change to the conventional fuel supply path, and at the same time, the space below the fuel tank 5 can be utilized for positioning the auxiliary tank.

Further in this embodiment, the flow passage extension structure is employed inside of the auxiliary tank 45, and when the tank is filled with a different fuel from the previous one, the two types of fuels can mix even more slowly.

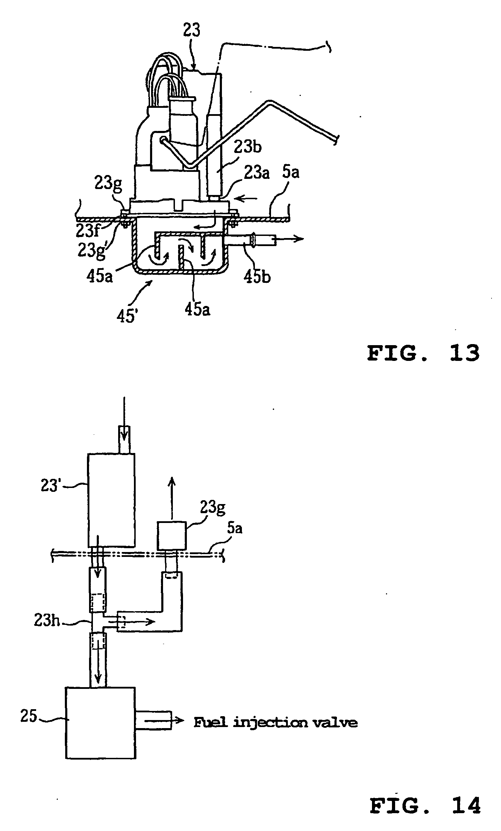

Note that in the third embodiment, the auxiliary tank 45 is formed integrally with the fuel pump 23, however, as shown in FIG. 13, an auxiliary tank 45' may be formed integrally with the fuel tank 5 by downwardly swelling out the bottom wall 5a of the fuel tank 5. In this case, the fuel ump 23 is fastened to the bottom wall 5a by means of bolts 23g and nuts 23g' implanted in the flange part 23f of the fuel pump 23.

Still further, in each embodiment and modification above, the case in which the auxiliary tank serving as the fuel reservoir is provided separately and independently is described, however, the fuel reservoir according to the present invention is not limited to this configuration. For instance, the high pressure fuel piping may have a capacity that serves as a fuel reservoir by constructing the high pressure fuel piping 24 with a pipe of larger diameter. Also, in this case, a pipe constituting the body fame may be used in place of the high pressure fuel piping.

Additionally, in each embodiment and modification example above, the case in which the auxiliary tank is formed on the discharge end of the fuel pump is described, however, the fuel reservoir may be formed on the suction end of the fuel pump.

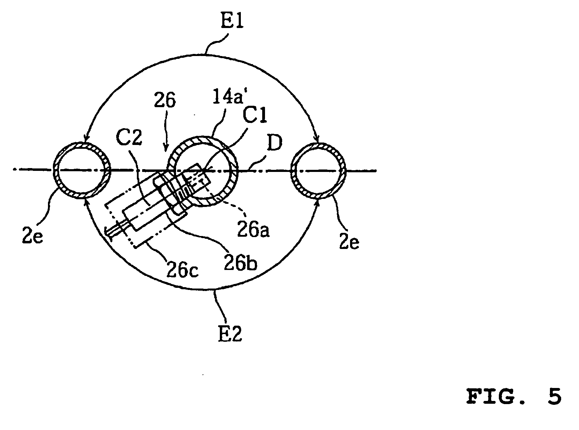

Also, in regard to the location of the exhaust gas sensor 26, it is not limited to the configuration of the first embodiment, but as shown in FIG. 5, the exhaust gas sensor 26 can be disposed in the areas E1 and E2 in which the exhaust gas sensor 26 is inclined forward or rearward relative to the plane "D" extending transversely containing the axis line C1 of the vertical pipe section 14a' on it.

In addition, the first embodiment describes the case in which the exhaust gas sensor is disposed on the vertical pipe section of the exhaust pipe running along the down tube part, however, the vertical pipe section according to the present invention is not limited to the one disposed to run along the down tube part. The exhaust gas sensor may be disposed on the vertical pipe section provided in the rear part of the motorcycle body in the upwardly rising manner, for instance.

Further, the embodiments above describes the case in which the fuel pump and the pressure regulator are integrated, however, the scope of the present invention is not limited to this configuration. It is understood that the present invention may be applied to the case in which, as shown in FIG. 14, a fuel pump body 23' and a pressure regulator 23g are configured separately and connected by a joint member 23h, for instance. In this case, it is preferable to provide the auxiliary tank 25 between the joint member 23h and the fuel injection valve 21.

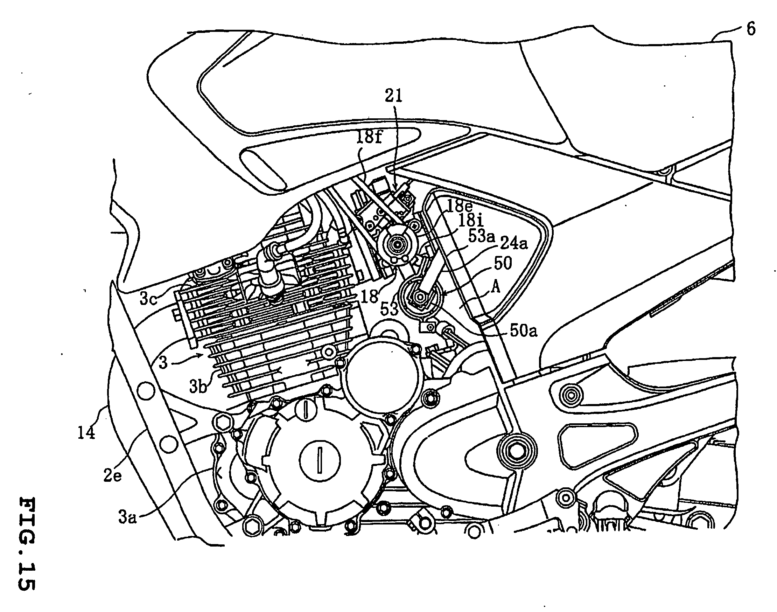

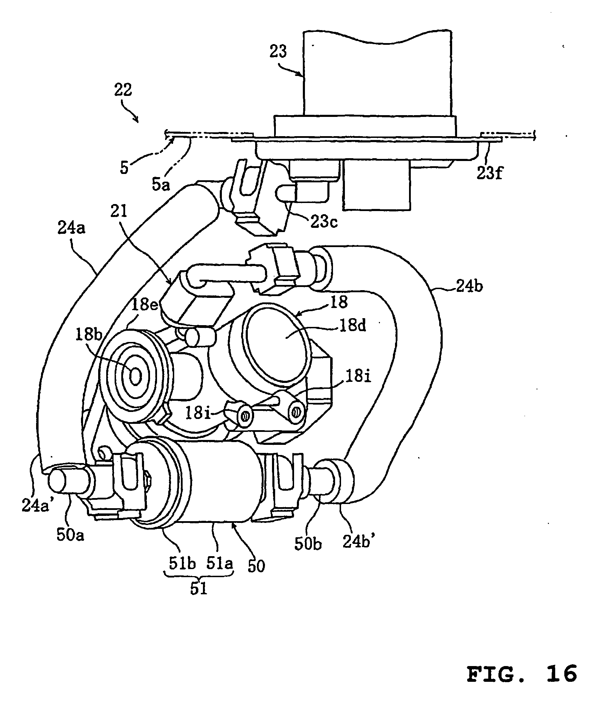

Figs. 15 and 16 are explanatory drawings of a fourth embodiment, in which similar parts or equivalent parts are denoted by the same reference numerals as in Figs. 1 and 2.

The fourth embodiment is an example in which an auxiliary tank serving as the fuel reservoir is disposed in a space "A" between the throttle body 18 and the rear part of the upper wall of the crankcase 3a to also serve as a fuel filter. The fuel filter 50 eliminates impurities typically contained in ethanol fuel and is not necessary in a case that gasoline is used as fuel.

The fuel filter 50 is disposed below the throttle body 18 and attached to a lower wall of the throttle body 18. Specifically, a pair of left and right boss sections 18i, 18i are formed on the lower wall of the throttle body 18 and a stay 53 is attached to the fuel filter 50 so that the stay 53 surrounds a periphery of the fuel filter 50. The fuel filter 50 is suspended and supported with the throttle body 18 by removably fastening the stay 53 to the boss sections 18i with bolts 53a. The fuel filter 50 is positioned lower than the left and right boss sections 18i. Accordingly, the stay 53 can be removed from the rear side.

The fuel filter 50 is housed in a cylindrical case 51. The case 51 has a case body 51a and a lid 51b removably screwed onto the case body 51a with its axis directed in the vehicle-width direction parallel to the crankshaft.

An upstream fuel piping 24a for connecting the fuel pump 23 with the fuel filter 50 is disposed vertically in the left side of the throttle body 18 in the vehicle-width direction. A downstream fuel piping 24b for connecting the fuel filter 50 with the fuel injection valve 21 is disposed vertically in the right side of the throttle body 18 in the vehicle-width direction.

A fuel inflow port 50a is formed on the lid 51b. A fuel outflow port 50b is formed on the case body 51a. The fuel inflow port 50a and the fuel outflow port 50b are directed toward outside in the crankshaft direction.

A downstream end 24a' of the upstream fuel piping 24a is connected to the fuel inflow port 50a and an upstream end 24b' of the downstream fuel piping 24b is connected to the fuel outflow port 50b.

In addition, the downstream end 24a' of the upstream fuel piping 24a together with the lid 51b is removable toward outside in the crankshaft direction while the upstream end 24b' of the downstream fuel piping 24b is removable toward outside in the crankshaft direction.

In the fourth embodiment, the fuel filter 50 is disposed between the throttle body 18 and the rear part of the upper wall of the crankcase 3a to also serve as an auxiliary tank. Therefore, the operational effect similar to that of the first embodiment is achieved by the fourth embodiment.

The fuel filter 50 eliminates impurities contained in ethanol fuel, which prevents impurities from flowing into the engine 3.

Here, the fuel filter 50 tends to accumulate impurities, thereby needs more frequent maintenance than other components and requires to replace a filter per a predetermined mileage.

In this embodiment, the fuel filter 50 is disposed below the throttle body 18 and the case 51 of the fuel filter 50 is disposed to be directed in the crankshaft direction. Therefore, the fuel filter 50 can be disposed in reduced size, which achieves direct access to the fuel filter 50 from the external of the vehicle and allows to perform easy maintenance.

In other words, the upstream fuel piping 24a together with the lid 51b is made removable toward outside in the crankshaft direction. Therefore, maintenance can be carried out only by removing the lid 51b. In case that the whole fuel filter 50 is replaced, the replacement work can be carried out only by removing the upstream fuel piping 24a and the downstream fuel piping 24b toward outside in the crankshaft direction and removing the stay 53 from the rear side.

In this embodiment, the upstream fuel piping 24a is disposed vertically in the left side of the throttle body 18 and the downstream fuel piping 24b is disposed vertically in the right side of the throttle body 18. Therefore, the high pressure fuel piping 24 can be routed compactly and the routing length of the high pressure fuel piping 24 can be minimized as required.

### DESCRIPTION OF REFERENCE NUMERALS AND SYMBOLS

1: motorcycle
2: body frame
3: engine
3a: crankcase
3b: cylinder body
7c: cylinder head
5: fuel tank
5a: bottom wall
18: throttle body
21: fuel injection valve
23: fuel pump
23c: discharge port
24: high pressure fuel piping
24a: upstream fuel piping
24a': downstream end
24b: downstream fuel piping
24b': upstream end
25, 35, 45, 45': auxiliary tank (fuel reservoir)
25c: fuel inflow pipe (fuel inflow port)
25e: fuel outflow pipe (fuel outflow port)
50: fuel filter (fuel reservoir)
50a: fuel inflow port
50b: fuel outflow port
51: casing

## Claims

1. A motorcycle (1) comprising: a body frame (2); an engine (3) mounted on the body frame, the engine being made up of a cylinder (3b) and a cylinder head (7c) stacked in the forward of a crankcase (3a); a throttle body (18) connected to the cylinder head of the engine; a fuel injection valve (21) for supplying fuel to the engine;
a fuel tank (5) mounted above the engine; and
a fuel pump (23) disposed in the fuel tank;
the motorcycle being capable of operating with different types of fuels,
wherein a fuel reservoir (25; 35; 45; 45') is defined separately from the fuel tank between the fuel tank and the rear part of the crankcase in the side view, the fuel reservoir being formed at a discharge port (23c) of the fuel pump.

2. The motorcycle according to Claim 1, wherein the fuel reservoir comprises a fuel filter.

3. The motorcycle according to Claim 1 or Claim 2, wherein the fuel reservoir is disposed between the throttle body and the rear part of the crankcase.

4. The motorcycle according to Claim 3, wherein the fuel reservoir is disposed below the throttle body and removably attached to the throttle body.

5. The motorcycle according to Claim 4, wherein the throttle body is disposed below the fuel tank, the fuel injection valve is disposed above the throttle body, and the fuel reservoir is disposed below the throttle body.

6. The motorcycle according to Claim 5, wherein a case of the fuel filter is in a cylinder-shape, the case being disposed with its axis directed in the crankshaft direction.

7. The motorcycle according to Claim 6, wherein an upstream fuel piping for connecting the fuel tank with the fuel filter is disposed in one side of the throttle body in the vehicle-width direction and a downstream fuel piping for connecting the fuel reservoir with the fuel injection valve is disposed in the other side of the throttle body in the vehicle-width direction.

8. The motorcycle according to Claim 7, wherein the fuel filter is disposed with its fuel inflow port and fuel outflow port directed toward outside in the crankshaft direction and a downstream end of the upstream fuel piping and an upstream end of the downstream fuel piping are connected to be removable in the crankshaft direction.

9. The motorcycle according to any one of the preceding claims, wherein the fuel reservoir is integrally formed with a bottom wall of the fuel tank.

10. The motorcycle according to any one of Claims 3 through 9, wherein the fuel reservoir has a flow passage extension structure that makes a fuel flow passage length longer than a linear distance from the fuel inlet to the fuel outlet.

11. A motorcycle according to any one of the preceding claims, wherein the fuel reservoir is defined separately from the fuel tank between the throttle body and the rear part of the upper wall of the crankcase.

## Patentansprüche

1. Motorrad (1), welches aufweist: eine Motorradkarosserie (2), einen an der Karosserie montierten Motor (3), welcher einen Zylinder (3b) und einen Zylinderkopf (7c) aufweist, die vor einem Motorgehäuse (3a) gestapelt angeordnet sind, eine mit dem Zylinderkopf des Motors verbundene Drosselklappe (18), ein Kraftstoffeinspritzventil (21) zum Zuführen von Kraftstoff an den Motor,
einen oberhalb des Motors montierten Kraftstofftank (5) und
eine in dem Kraftstofftank angeordnete Kraftstoffpumpe (23),
wobei das Motorrad mit verschiedenen Kraftstofftypen betrieben werden kann,
wobei ein Kraftstoffreservoir (25; 35; 45; 45') in der Seitenansicht getrennt von dem Kraftstofftank zwischen dem Kraftstofftank und dem hinteren Teil des Kurbelgehäuses festgelegt ist, wobei das Kraftstoffreservoir an einem Auslassanschluss (23c) der Kraftstoffpumpe ausgebildet ist.

2. Motorrad nach Anspruch 1, wobei das Kraftstoffreservoir einen Kraftstofffilter aufweist.

3. Motorrad nach Anspruch 1 oder Anspruch 2, wobei das Kraftstoffreservoir zwischen der Drosselklappe und dem hinteren Teil des Kurbelgehäuses angeordnet ist.

4. Motorrad nach Anspruch 3, wobei das Kraftstoffreservoir unterhalb der Drosselklappe angeordnet und abnehmbar an dieser befestigt ist.

5. Motorrad nach Anspruch 4, wobei die Drosselklappe unterhalb des Kraftstofftanks angeordnet ist, das Kraftstoffeinspritzventil oberhalb der Drosselklappe angeordnet ist und das Kraftstoffreservoir unterhalb der Drosselklappe angeordnet ist.

6. Motorrad nach Anspruch 5, wobei ein Gehäuse des Kraftstofffilters zylinderförmig ist und mit seiner Achse in Richtung des Kurbelgehäuses angeordnet ist.

7. Motorrad nach Anspruch 6, wobei eine aufstromige Kraftstoffleitung, die den Kraftstofftank mit dem Kraftstofffilter verbinden soll, in Richtung der Fahrzeugbreite an einer Seite der Drosselklappe angeordnet ist und eine abstromige Kraftstoffleitung, die das Kraftstoffreservoir mit dem Kraftstoffeinspritzventil verbinden soll, in Richtung der Fahrzeugbreite an der anderen Seite der Drosselklappe angeordnet ist.

8. Motorrad nach Anspruch 7, wobei der Kraftstofffilter so angeordnet ist, dass sein Kraftstoffeinlassanschluss und sein Kraftstoffauslassanschluss in Richtung des Kurbelgehäuses nach außen weisen, und ein abstromiges Ende der aufstromigen Kraftstoffleitung und ein aufstromiges Ende der abstromigen Kraftstoffleitung in Richtung des Kurbelgehäuses abnehmbar bzw. entfernbar miteinander verbunden sind.

9. Motorrad nach einem der vorangegangenen Ansprüche, wobei das Kraftstoffreservoir mit einer unteren Wand des Kraftstofftanks einstückig ausgebildet ist.

10. Motorrad nach einem der Ansprüche 3 bis 9, wobei das Kraftstoffreservoir eine die Durchflussleitung verlängernde Struktur aufweist, welche die Länge einer Kraftstoffdurchflussleitung so vergrößert, dass diese länger ist als ein linearer Abstand von dem Kraftstoffeinlass zu dem Kraftstoffauslass.

11. Motorrad nach einem der vorangegangenen Ansprüche, wobei das Kraftstoffreservoir getrennt von dem Kraftstofftank zwischen der Drosselklappe und dem hinteren Teil der oberen Wand des Kurbelgehäuses festgelegt ist.

## Revendications

1. Motocyclette (1) comprenant : un châssis (2) ; un moteur (3) monté sur le châssis, le moteur étant constitué d'un cylindre (3b) et d'une culasse (7c) disposés à l'avant d'un carter de moteur (3a) ; un corps de papillon (18) raccordé à la culasse du moteur ; une soupape d'injection de carburant (21) pour alimenter en carburant le moteur ;
un réservoir de carburant (5) monté au-dessus du moteur ; et
une pompe de carburant (23) disposée dans le réservoir de carburant ;
la motocyclette pouvant fonctionner avec différents types de carburants,
dans laquelle un réservoir de carburant (25 ; 35 ; 45 ; 45') est défini séparément du réservoir de carburant entre le réservoir de carburant et la partie arrière du carter de moteur dans la vue de côté, le réservoir de carburant étant formé au niveau d'un orifice d'évacuation (23c) de la pompe de carburant.

2. Motocyclette selon la revendication 1, dans laquelle le réservoir de carburant comprend un filtre à carburant.

3. Motocyclette selon la revendication 1 ou 2, dans laquelle le réservoir de carburant est disposé entre le corps de papillon et la partie arrière du carter de moteur.

4. Motocyclette selon la revendication 3, dans laquelle le réservoir de carburant est disposé en dessous du corps de papillon et fixé de manière amovible au corps de papillon.

5. Motocyclette selon la revendication 4, dans laquelle le corps de papillon est disposé en dessous du réservoir de carburant, la soupape d'injection de carburant est disposée au-dessus du corps de papillon, et le réservoir de carburant est disposé en dessous du corps de papillon.

6. Motocyclette selon la revendication 5, dans laquelle un boîtier du filtre à carburant est de forme cylindrique, le boîtier étant disposé avec son axe dirigé dans la direction du carter de moteur.

7. Motocyclette selon la revendication 6, dans laquelle un tuyau de carburant amont pour le raccordement du réservoir de carburant avec le filtre à carburant est disposé dans un côté du corps de papillon dans le sens de la largeur du véhicule et un tuyau de carburant aval pour le raccordement du réservoir de carburant avec la soupape d'injection de carburant est disposé dans l'autre côté du corps de papillon dans le sens de la largeur du véhicule.

8. Motocyclette selon la revendication 7, dans laquelle le filtre à carburant est disposé avec son orifice d'admission de carburant et son orifice de sortie de carburant dirigés vers l'extérieur dans la direction du carter de moteur et une extrémité aval du tuyau de carburant amont et une extrémité amont du tuyau de carburant aval sont reliées pour être amovibles dans la direction du carter de moteur.

9. Motocyclette selon l'une quelconque des revendications précédentes, dans laquelle le réservoir de carburant est formé intégralement avec une paroi inférieure du réservoir de carburant.

10. Motocyclette selon l'une quelconque des revendications 3 à 9, dans laquelle le réservoir de carburant comporte une structure d'extension de passage d'écoulement qui rend un passage d'écoulement du carburant plus long qu'une distance linéaire de l'entrée du carburant à la sortie du carburant.

11. Motocyclette selon l'une quelconque des revendications précédentes, dans laquelle le réservoir de carburant est défini séparément du réservoir de carburant entre le corps de papillon et la partie arrière de la paroi supérieure du carter de moteur.
